# EUROPEAN PATENT APPLICATION

(11) **EP 3 139 597 A1**
(43) Date of publication of application: **08.03.2017**
(21) Application number: 15795805.9
(22) Date of filing: 02.03.2015
(51) Int. Cl.: H04N 7/15

(54) **METHOD, DEVICE, AND SYSTEM FOR PRESENTING VIDEO CONFERENCE**

(30) Priority: 21.05.2014 CN 201410216238
(71) Applicant: Huawei Technologies Co. Ltd., Shenzhen, Guangdong 518129 (CN)
(72) Inventor: LI, Ying, Shenzhen Guangdong 518129 (CN); JIAN, Xuying, Shenzhen Guangdong 518129 (CN); TANG, Chang, Shenzhen Guangdong 518129 (CN)
(74) Representative: Gill Jennings & Every LLP
(86) International application number: PCT/CN2015/073481
(87) International publication number: WO 2015/176569

(57) **Abstract**

Embodiments of the present invention provide a method, an apparatus, and a system for presentation in a video conference. The method includes: receiving a video stream of at least one sending endpoint; grading video content according to a video stream of each sending endpoint, to determine a video content grade corresponding to each sending endpoint, where the at least one sending endpoint corresponds to multiple video content grades; determining a video layout used to indicate a display area corresponding to each video content grade of the multiple video content grades, where the video content grades correspond to display areas one by one; and determining, according to video content corresponding to each video content grade of the multiple video content grades and the video layout, to-be-presented video content of each display area of multiple display areas. The embodiments of the present invention enable information to be more appropriately displayed in a display area and avoid manual selection and adjustment by a user, thereby making a conference more efficient.

## Description

This application claims priority to Chinese Patent Application No. 201410216238.8, filed with the Chinese Patent Office on May 21, 2014 and entitled "METHOD, APPARATUS, AND SYSTEM FOR PRESENTATION IN VIDEO CONFERENCE", which is incorporated herein by reference in its entirety.

### TECHNICAL FIELD

The present invention relates to the communications field, and more specifically, to a method, an apparatus, and a system for presentation in a video conference.

### BACKGROUND

In various types of current multipoint video communication, video images in a video conference are basically formed by using a camera shooting area as a basic unit, and the video images are stitched or the video images are directly transmitted to a site screen. Therefore, content viewed on each site screen is usually images shot by one camera, or an image formed by combining images shot by multiple cameras. In this case, the following problems arise: Redundant information is presented in a conference; focal character information and non-focal character information of the conference are distributed to different areas of the screen without distinguishing information focuses on the screen in terms of layout. As a result, current focal character information of the conference may appear in each screen area, a communication focus is constantly changing, non-focus information even occupies a central area of the screen, and the like, which affects communication effects.

In terms of manners of controlling viewed content, there are usually the following common manners: a voice activated switching mechanism and a non-voice activated switching (manual switching) mechanism. In the voice activated switching mechanism, screen images are switched continually in disorder, without distinguishing focuses in screen areas; in the non-voice activated switching mechanism, a person needs to be specially assigned in each site to switch screen content any time to meet viewing requirements in real time. Therefore, image viewing efficiency is not satisfactorily high. In particular, in a conference intended for discussion or collaboration, a conference focus changes quickly, and therefore, an extreme situation of a viewing effect may occur sometimes, for example, an effect of "hearing without seeing a person" when a speaker or material is not presented properly.

### SUMMARY

Embodiments of the present invention provide a method, an apparatus, and a system for presentation in a video conference, which enables information to be more appropriately displayed in a display area and avoids manual selection and adjustment by a user, thereby making a conference more efficient.

According to a first aspect, a method for presentation in a video conference is provided, including:
receiving a video stream of each sending endpoint of at least one sending endpoint;
grading video content in the video stream of each sending endpoint according to the video stream of each sending endpoint, to determine a video content grade corresponding to each sending endpoint, where the at least one sending endpoint corresponds to multiple video content grades;
determining a video layout, where the video layout is used to indicate a display area corresponding to each video content grade of the multiple video content grades, where the display area is a display area that is included in multiple display areas of a receiving endpoint, and the video content grades correspond to the display areas one by one; and
determining, according to video content corresponding to each video content grade of the multiple video content grades and the video layout, to-be-presented video content corresponding to each display area of the multiple display areas, so as to present the corresponding to-be-presented video content by using each display area of the multiple display areas, where to-be-presented video content corresponding to different display areas includes video content corresponding to different video content grades.

With reference to the first aspect, in a first possible implementation manner of the first aspect, the method is executed by a control device, and the method further includes:
sending the to-be-presented video content corresponding to each display area of the multiple display areas and indication information to the receiving endpoint, where the indication information is used to indicate a correspondence between the display area and the to-be-presented video content, so that the receiving endpoint presents the corresponding to-be-presented video content by using each display area of the multiple display areas.

With reference to the first aspect, in a second possible implementation manner of the first aspect, the method is executed by the receiving endpoint, and the method further includes:
presenting, by the receiving endpoint, the corresponding to-be-presented video content by using each display area of the multiple display areas.

With reference to the first aspect or the first or the second possible implementation manner of the first aspect, in a third possible implementation manner of the first aspect, the method further includes: receiving event information of all or some sending endpoints of the at least one sending endpoint; and
the grading video content in the video stream of each sending endpoint according to the video stream of each sending endpoint includes:
grading video content in video streams of the all or some sending endpoints according to the event information of the all or some sending endpoints and according to the video streams of the all or some sending endpoints.

With reference to the third possible implementation manner of the first aspect, in a fourth possible implementation manner of the first aspect, the event information of the all or some sending endpoints of the at least one sending endpoint is used to indicate a participant event at the all or some sending endpoints; and
the grading video content in video streams of the all or some sending endpoints according to the event information of the all or some sending endpoints and according to the video streams of the all or some sending endpoints includes:
performing video splitting on the video streams of the all or some sending endpoints in units of persons, to obtain video content of each participant at the all or some sending endpoints; and
grading the video content of each participant at the all or some sending endpoints according to the participant event at the all or some sending endpoints, to determine a video content grade of the video content of each participant.

With reference to the fourth possible implementation manner of the first aspect, in a fifth possible implementation manner of the first aspect, the event information of the all or some sending endpoints of the at least one sending endpoint is used to indicate a keynote speaker event, a collaborator event, a speaker event, or a material sharer event at the all or some sending endpoints.

With reference to any one of the third to the fifth possible implementation manners of the first aspect, in a sixth possible implementation manner of the first aspect, the event information of the all or some sending endpoints of the at least one sending endpoint is used to indicate that the all or some sending endpoints need to share a data document, where the video streams of the all or some sending endpoints include the data document; and
the grading video content in video streams of the all or some sending endpoints according to the event information of the all or some sending endpoints and according to the video streams of the all or some sending endpoints includes:
separating the data document from the video streams of the all or some sending endpoints according to the event information, and grading the data document that is separated from the video streams of the all or some sending endpoints, to determine video content grades of the data documents.

With reference to any one of the third to the sixth possible implementation manners of the first aspect, in a seventh possible implementation manner of the first aspect, after the grading video content in video streams of the all or some sending endpoints according to the event information of the all or some sending endpoints and according to the video streams of the all or some sending endpoints, the method further includes:
if event information of any one sending endpoint of the all or some sending endpoints is changed, dynamically adjusting video content grades corresponding to the all or some sending endpoints.

With reference to the first aspect or the first or the second possible implementation manner of the first aspect, in an eighth possible implementation manner of the first aspect, the grading video content in the video stream of each sending endpoint according to the video stream of each sending endpoint includes:
performing event determining on video content in video streams of all or some sending endpoints of the at least one sending endpoint, and grading the video content in the video streams of the all or some sending endpoints after the event determining.

With reference to the eighth possible implementation manner of the first aspect, in a ninth possible implementation manner of the first aspect, the performing event determining on video content in video streams of all or some sending endpoints of the at least one sending endpoint, and grading the video content in the video streams of the all or some sending endpoints after the event determining includes:
performing video splitting on the video streams of the all or some sending endpoints in units of persons, to obtain video content of each participant of the all or some sending endpoints; and
performing event determining on the video content of each participant, and grading the video content of each participant after the event determining, to determine a video content grade of the video content of each participant.

With reference to the ninth possible implementation manner of the first aspect, in a tenth possible implementation manner of the first aspect, the performing event determining on the video content of each participant includes:
determining that the video content of the participant is video content of a keynote speaker, video content of a collaborator, video content of a speaker, or video content of a material sharer.

With reference to any one of the eighth to the tenth possible implementation manners of the first aspect, in an eleventh possible implementation manner of the first aspect, the performing event determining on video content in video streams of all or some sending endpoints of the at least one sending endpoint, and grading the video content in the video streams of the all or some sending endpoints after the event determining includes:
performing video splitting on the video streams of the all or some sending endpoints, and determining that a data document exists in each of the video streams of the all or some sending endpoints; and
grading the data document in the split video streams of the all or some sending endpoints, to determine video content grades of the data documents.

With reference to the first aspect or any one of the first to the eleventh possible implementation manners of the first aspect, in a twelfth possible implementation manner of the first aspect, the grading video content in the video stream of each sending endpoint includes:
grading the video content in the video stream of each sending endpoint, where the video content grade corresponding to each sending endpoint does not overlap a video content grade of another sending endpoint.

With reference to the first aspect or any one of the first to the twelfth possible implementation manners of the first aspect, in a thirteenth possible implementation manner of the first aspect, the determining to-be-presented video content corresponding to each display area of the multiple display areas includes:
generating, according to the video content corresponding to each video content grade of the multiple video content grades and the video layout, to-be-presented video content corresponding to all or some of the display areas, where all or some content of the to-be-presented video content corresponding to the all or some of the display areas is set in a manner of size changing and/or color marking.

According to a second aspect, an apparatus for presentation in a video conference is provided, including:
a receiving unit, configured to receive a video stream of each sending endpoint of at least one sending endpoint;
a first determining unit, configured to grade video content in the video stream of each sending endpoint according to the video stream of each sending endpoint, to determine a video content grade corresponding to each sending endpoint, where the at least one sending endpoint corresponds to multiple video content grades;
a second determining unit, configured to determine a video layout, where the video layout is used to indicate a display area corresponding to each video content grade of the multiple video content grades, where the display area is a display area that is included in multiple display areas of a receiving endpoint, and the video content grades correspond to the display areas one by one; and
a third determining unit, configured to determine, according to video content corresponding to each video content grade of the multiple video content grades and the video layout, to-be-presented video content corresponding to each display area of the multiple display areas, so as to present the corresponding to-be-presented video content by using each display area of the multiple display areas, where to-be-presented video content corresponding to different display areas includes video content corresponding to different video content grades.

With reference to the second aspect, in a first possible implementation manner of the second aspect, the apparatus is a control device, and the apparatus further includes:
a sending unit, configured to send the to-be-presented video content corresponding to each display area of the multiple display areas and indication information to the receiving endpoint, where the indication information is used to indicate a correspondence between the display area and the to-be-presented video content, so that the receiving endpoint presents the corresponding to-be-presented video content by using each display area of the multiple display areas.

With reference to the second aspect, in a second possible implementation manner of the second aspect, the apparatus is the receiving endpoint, and the apparatus further includes:
a presenting unit, configured to present the corresponding to-be-presented video content by using each display area of the multiple display areas.

With reference to the second aspect or the first or the second possible implementation manner of the second aspect, in a third possible implementation manner of the second aspect, the receiving unit is further configured to: receive event information of all or some sending endpoints of the at least one sending endpoint; and
the first determining unit is specifically configured to: grade video content in video streams of the all or some sending endpoints according to the event information of the all or some sending endpoints and according to the video streams of the all or some sending endpoints.

With reference to the third possible implementation manner of the second aspect, in a fourth possible implementation manner of the second aspect, the event information of the all or some sending endpoints of the at least one sending endpoint is used to indicate a participant event at the all or some sending endpoints; and
the first determining unit is specifically configured to:
perform video splitting on the video streams of the all or some sending endpoints in units of persons, to obtain video content of each participant at the all or some sending endpoints; and
grade the video content of each participant at the all or some sending endpoints according to the participant event at the all or some sending endpoints, to determine a video content grade of the video content of each participant.

With reference to the fourth possible implementation manner of the second aspect, in a fifth possible implementation manner of the second aspect, the event information of the all or some sending endpoints of the at least one sending endpoint is used to indicate a keynote speaker event, a collaborator event, a speaker event, or a material sharer event at the all or some sending endpoints.

With reference to any one of the third to the fifth possible implementation manners of the second aspect, in a sixth possible implementation manner of the second aspect, the event information of the all or some sending endpoints of the at least one sending endpoint is used to indicate that the all or some sending endpoints need to share a data document, where the video streams of the all or some sending endpoints include the data document; and
the first determining unit is specifically configured to:
separate the data document from the video streams of the all or some sending endpoints according to the event information, and grade the data document that is separated from the video streams of the all or some sending endpoints, to determine video content grades of the data documents.

With reference to any one of the third to the sixth possible implementation manners of the second aspect, in a seventh possible implementation manner of the second aspect, after the video content in the video streams of the all or some sending endpoints is graded according to the event information of the all or some sending endpoints and according to the video streams of the all or some sending endpoints, the first determining unit is further configured to:
if event information of any one sending endpoint of the all or some sending endpoints is changed, dynamically adjust video content grades corresponding to the all or some sending endpoints.

With reference to the second aspect or the first or the second possible implementation manner of the second aspect, in an eighth possible implementation manner of the second aspect, the first determining unit is specifically configured to:
perform event determining on video content in video streams of all or some sending endpoints of the at least one sending endpoint, and grade the video content in the video streams of the all or some sending endpoints after the event determining.

With reference to the eighth possible implementation manner of the second aspect, in a ninth possible implementation manner of the second aspect, the first determining unit is specifically configured to:
perform video splitting on the video streams of the all or some sending endpoints in units of persons, to obtain video content of each participant of the all or some sending endpoints; and
perform event determining on the video content of each participant, and grade the video content of each participant after the event determining, to determine a video content grade of the video content of each participant.

With reference to the ninth possible implementation manner of the second aspect, in a tenth possible implementation manner of the second aspect, the first determining unit is specifically configured to:
determine that the video content of the participant is video content of a keynote speaker, video content of a collaborator, video content of a speaker, or video content of a material sharer.

With reference to any one of the eighth to the tenth possible implementation manners of the second aspect, in an eleventh possible implementation manner of the second aspect, the first determining unit is specifically configured to:
perform video splitting on the video streams of the all or some sending endpoints, and determine that a data document exists in each of the video streams of the all or some sending endpoints; and
grade the data document in the split video streams of the all or some sending endpoints, to determine video content grades of the data documents.

With reference to the second aspect or any one of the first to the eleventh possible implementation manners of the second aspect, in a twelfth possible implementation manner of the second aspect, the first determining unit is specifically configured to:
grade the video content in the video stream of each sending endpoint, where the video content grade corresponding to each sending endpoint does not overlap a video content grade of another sending endpoint.

With reference to the second aspect or any one of the first to the twelfth possible implementation manners of the second aspect, in a thirteenth possible implementation manner of the second aspect, the third determining unit is specifically configured to:
generate, according to the video content corresponding to each video content grade of the multiple video content grades and the video layout, to-be-presented video content corresponding to all or some of the display areas, where all or some content of the to-be-presented video content corresponding to the all or some of the display areas is set in a manner of size changing and/or color marking.

According to a third aspect, a system for presentation in a video conference is provided, including the apparatus for presentation in a video conference according to the second aspect or any possible implementation manner of the second aspect and including at least one sending endpoint, where each endpoint of the at least one sending endpoint is configured to send a video stream to the apparatus.

Therefore, in the embodiments of the present invention, after a video stream of each sending endpoint of at least one sending endpoint is received, video content in the video stream of each sending endpoint is graded to obtain multiple video content grades corresponding to the at least one sending endpoint; a video layout is determined, where the video layout indicates a display area, of multiple display areas of a receiving endpoint, corresponding to each video content grade of the multiple video content grades; and to-be-presented video content corresponding to each display area of the multiple display areas is determined according to video content corresponding to each video content grade of the multiple video content grades and the video layout, so that the corresponding to-be-presented video content may be presented by using each display area of the multiple display areas, where to-be-presented video content corresponding to different display areas includes video content corresponding to different video content grades. This enables information to be more appropriately displayed in a display area, and avoids manual selection and adjustment by a user, thereby improving video conference experience. The user focuses all attention on a conference itself as the user does not need to perform any operation, which makes the conference more efficient.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for presentation in a video conference according to an embodiment of the present invention;
FIG. 2 is a schematic diagram of grading a video stream of an endpoint corresponding to each video site and a schematic diagram of setting a visual expression manner for video content according to another embodiment of the present invention;
FIG. 3a-FIG. 3c show diagrams of division of display areas on a display device in a form of a current mainstream terminal;
FIG. 4 is a schematic block diagram of an apparatus for presentation in a video conference according to another embodiment of the present invention;
FIG. 5 is a schematic block diagram of an apparatus for presentation in a video conference according to another embodiment of the present invention;
FIG. 6 is a schematic block diagram of an apparatus for presentation in a video conference according to another embodiment of the present invention;
FIG. 7 is a schematic block diagram of an apparatus for presentation in a video conference according to another embodiment of the present invention;
FIG. 8 is a schematic block diagram of a system for presentation in a video conference according to another embodiment of the present invention; and
FIG. 9 is a schematic block diagram of an endpoint according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

A control device in the embodiments of the present invention may be referred to as a central control device, that is, a multipoint control unit (Multiple Control Unit, MCU), of a video conference system. Different endpoints in the embodiments of the present invention may appear in different space of multipoint videoconferencing, and each place/location/participant/conference room may be collectively referred to as an endpoint, where one endpoint may correspond to one or more terminal devices. For example, there may be multiple terminal devices in one conference room, and the terminal devices include, but are not limited to a three-screen terminal, a single-screen terminal, a desktop computer, a Pad, and a Phone.

A receiving endpoint mentioned in the embodiments of the present invention may also implement functions of a sending endpoint, and a sending endpoint in the embodiments of the present invention may also implement functions of a receiving endpoint. In the embodiments of the present invention, the sending endpoint and the receiving endpoint are distinguished only for ease of description.

The embodiments of the present invention may be applied to various multipoint video conferences, for example, a telepresence (Telepresence) conference, videoconferencing, a conference call, and various video conferences.

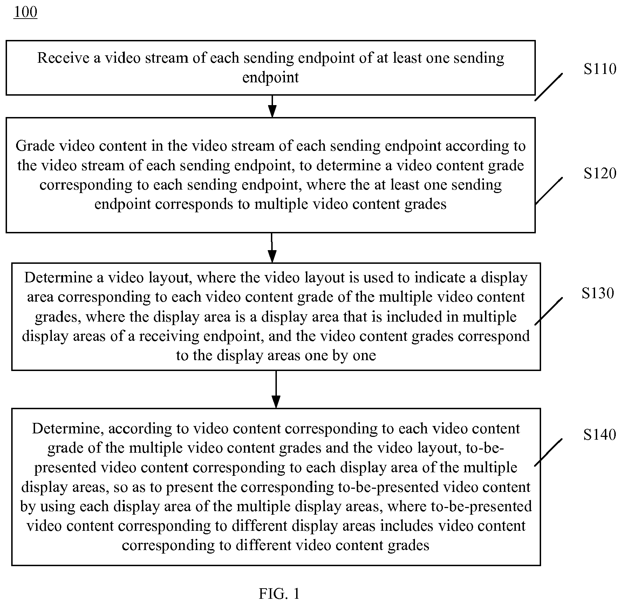

FIG. 1 is a schematic flowchart of a method 100 for presentation in a video conference according to an embodiment of the present invention. The method 100 is implemented by an apparatus for presentation in a video conference. As shown in FIG. 1, the method 100 includes:
S110: Receive a video stream of each sending endpoint of at least one sending endpoint.
S120: Grade video content in the video stream of each sending endpoint according to the video stream of each sending endpoint, to determine a video content grade corresponding to each sending endpoint, where the at least one sending endpoint corresponds to multiple video content grades.
S130: Determine a video layout, where the video layout is used to indicate a display area corresponding to each video content grade of the multiple video content grades, where the display area is a display area that is included in multiple display areas of a receiving endpoint, and the video content grades correspond to the display areas one by one.
S140: Determine, according to video content corresponding to each video content grade of the multiple video content grades and the video layout, to-be-presented video content corresponding to each display area of the multiple display areas, so as to present the corresponding to-be-presented video content by using each display area of the multiple display areas, where to-be-presented video content corresponding to different display areas includes video content corresponding to different video content grades.

In the embodiment of the present invention, after receiving the video stream of each sending endpoint of the at least one sending endpoint, the apparatus for presentation in a video conference may grade the video content in the video stream of each sending endpoint, so as to determine the video content grade corresponding to each sending endpoint. The video content in the video stream of each sending endpoint corresponds to one or more video content grades, but the at least one sending endpoint corresponds to multiple video content grades. The apparatus for presentation in a video conference may determine the video layout, and the video layout is used to indicate a display area corresponding to each video content grade of the multiple video content grades. The display area is a display area that is included in the multiple display areas of the receiving endpoint, and the video content grades correspond to the display areas one by one. Then, the apparatus for presentation in a video conference may determine, according to the video content corresponding to each video content grade of the multiple video content grades and the video layout, the to-be-presented video content corresponding to each display area of the multiple display areas, so as to present the corresponding to-be-presented video content by using each display area of the multiple display areas, and the to-be-presented video content corresponding to the different display areas includes the video content corresponding to the different video content grades.

Therefore, in the embodiment of the present invention, after a video stream of each sending endpoint of at least one sending endpoint is received, video content in the video stream of each sending endpoint is graded to obtain multiple video content grades corresponding to the at least one sending endpoint; a video layout is determined, where the video layout indicates a display area, of multiple display areas of a receiving endpoint, corresponding to each video content grade of the multiple video content grades; and to-be-presented video content corresponding to each display area of the multiple display areas is determined according to video content corresponding to each video content grade of the multiple video content grades and the video layout, so that the corresponding to-be-presented video content may be presented by using each display area of the multiple display areas, where to-be-presented video content corresponding to different display areas includes video content corresponding to different video content grades. This enables information to be more appropriately displayed in a display area, and avoids manual selection and adjustment by a user, thereby improving video conference experience. The user focuses all attention on a conference itself as the user does not need to perform any operation, which makes the conference more efficient.

Further, when the video content is graded, a video content grade corresponding to focus information may be set to be higher than a video content grade corresponding to non-focus information. Because the to-be-presented video content corresponding to the different display areas includes the video content corresponding to the different video content grades, the focus information and the non-focus information can be distributed to different display areas of a display device, so that focus information in a video conference can be presented clearly and automatically, and non-focus information can be presented in an appropriate and auxiliary manner, which can further improve appropriateness of information display in the display areas.

It should be understood that, in the embodiment of the present invention, each sending endpoint may correspond to one or multiple video content grades.

It should be understood that, in the embodiment of the present invention, video content grades corresponding to different sending endpoints may overlap, or may not overlap. That is, if the video content grades corresponding to the different sending endpoints overlap, it indicates that video content of more than one sending endpoint may be displayed in one display area of the receiving endpoint; if the video content grades corresponding to the different sending endpoints do not overlap, it may indicate that video content of only one sending endpoint is displayed in one display area of the receiving endpoint.

It should be understood that, in the embodiment of the present invention, video content corresponding to one video content grade may be further split into multiple types of video content, and one display area may be further divided into multiple display sub-areas, where each display sub-area may correspond to one type of video content. The video content corresponding to one video content grade may be further divided into multiple types of video content according to importance of the video content, and the further divided video content is allocated to the display sub-areas.

It should be understood that, in the embodiment of the present invention, one display area may be a continuous area, or a discontinuous area. For example, a central area of the display device may be set as one display area, and areas on the left and right sides of the central area are set as another display area. In this case, the another display area is a discontinuous area.

It should be further understood that, in the embodiment of the present invention, when display devices of multiple terminals at the receiving endpoint present a same video stream, display areas for presenting the same video stream may be referred to as one display area.

In the embodiment of the present invention, the method 100 for presentation in a video conference may be implemented by a control device, or may be implemented by a receiving endpoint for displaying a video conference. That is, the apparatus for presentation in a video conference may be a control device, or may be a receiving endpoint for displaying a video conference.

When the method 100 for presentation in a video conference is implemented by a control device, the method 100 may further include:
sending the to-be-presented video content corresponding to each display area of the multiple display areas and indication information to the receiving endpoint, where the indication information is used to indicate a correspondence between the display area and the to-be-presented video content, so that the receiving endpoint presents the corresponding to-be-presented video content by using each display area of the multiple display areas.

That is, after determining the to-be-presented video content corresponding to each display area of the multiple display areas of the receiving endpoint, the control device may send the to-be-presented video content corresponding to each display area to the receiving endpoint, and send the indication information to the receiving endpoint at the same time, where the indication information is used to indicate the correspondence between the display area and the to-be-presented video content. To-be-presented video content corresponding to each sending endpoint and the indication information may be sent at the same time. For example, the to-be-presented video content corresponding to each display area and the indication information may be compressed and sent in a unified manner. For example, an identifier of the display area and the to-be-presented video content may be compressed and sent in a unified manner. Certainly, the to-be-presented video content corresponding to each sending endpoint and the indication information may not be sent at the same time. The indication information may be implicit information, or may be explicit information.

When the method 100 for presentation in a video conference is implemented by a control device, the method 100 may further include:
presenting, by the receiving endpoint, the corresponding to-be-presented video content by using each display area of the multiple display areas.

That is, the sending endpoint may directly send the video stream to the receiving endpoint, or send the video stream to the receiving endpoint by using another device. After determining the to-be-presented video content corresponding to each display area of the multiple display areas of the receiving endpoint according to the video stream of each sending endpoint of the at least one sending endpoint, the receiving endpoint may directly present the corresponding to-be-presented video content by using each display area of the multiple display areas.

Optionally, in the embodiment of the present invention, the grading video content in the video stream of each sending endpoint according to the video stream of each sending endpoint in S120 may include:
performing event determining on video content in video streams of all or some sending endpoints of the at least one sending endpoint, and grading the video content in the video streams of the all or some sending endpoints after the event determining.

Specifically, after receiving the video streams of the all or some sending endpoints of the at least one sending endpoint, the apparatus for presentation in a video conference may: perform video splitting on the video streams of the all or some sending endpoints in units of persons, to obtain video content of each participant of the all or some sending endpoints; perform event determining on the video content of each participant, for example, determining that the video content of the participant is video content of a keynote speaker, video content of a collaborator, video content of a speaker, or video content of a material sharer; and grade the video content of each participant after the event determining, to determine a video content grade of the video content of each participant, for example, determining that the video content of the keynote speaker is video content of a highest video content grade.

Specifically, in the embodiment of the present invention, the performing event determining on the video content of each participant may be performing event determining according to a feature of each participant. For example, it is determined whether the participant is a keynote speaker, a collaborator, or a material sharer according to a facial feature or a behavioral feature of the participant.

In the embodiment of the present invention, after receiving the video streams of the all or some sending endpoints of the at least one sending endpoint, the apparatus for presentation in a video conference may perform video splitting on the video streams of the all or some sending endpoints. When it is determined, by performing event determining on the split video streams, that a data document exists in each of the video streams of the all or some sending endpoints, the apparatus for presentation in a video conference may grade the data document in the split video streams of the all or some sending endpoints, to determine video content grades of the data documents. For example, it may be determined that the data document is video content of a highest video content grade. The data document may be a PPT, Word, or Image file, or the like.

It should be understood that, in the embodiment of the present invention, the video stream sent by each sending endpoint to the apparatus for presentation in a video conference may also be a video stream that does not need to be split. In this case, the apparatus for presentation in a video conference may directly perform event determining according to the video stream that does not need to be split, and determine a video content grade. That the video stream does not need to be split may be that the video stream is already split by each sending endpoint, or the video stream itself does not need to be split. For example, when shooting is being performed, different characters are shot by using different cameras, and video content corresponding to the different characters are independent of each other in one video stream and therefore does not need to be split.

Optionally, in the embodiment of the present invention, the all or some sending endpoints of the foregoing at least one sending endpoint may further send event information to the apparatus for presentation in a video conference, so that the apparatus for presentation in a video conference may receive the event information of the all or some sending endpoints of the at least one sending endpoint, and may then grade the video content in the video streams of the all or some sending endpoints according to the event information of the all or some sending endpoints and according to the video streams of the all or some sending endpoints.

In the embodiment of the present invention, the event information of the all or some sending endpoints of the foregoing at least one sending endpoint may be used to indicate a participant event at the all or some sending endpoints. Then, in this case, the apparatus for presentation in a video conference may: perform video splitting on the video streams of the all or some sending endpoints in units of persons, to obtain video content of each participant at the all or some sending endpoints; and grade the video content of each participant at the all or some sending endpoints according to the participant event at the all or some sending endpoints, to determine a video content grade of the video content of each participant. Optionally, the event information of the all or some sending endpoints of the at least one sending endpoint is used to indicate a keynote speaker event, a collaborator event, a speaker event, or a material sharer event at the all or some sending endpoints.

Specifically, because a video conference focuses on communication between people, and in particular, when participants at a site where a sending endpoint is located are important, video splitting may be performed on a video stream of the sending endpoint in units of persons. Then, video content of each participant of the sending endpoint obtained by splitting is graded according to event information of the sending endpoint. For example, if event information sent by the sending endpoint is used to indicate a keynote speaker event, video content corresponding to the keynote speaker may be graded. For example, it is determined that the video content corresponding to the keynote speaker is video content of a high video content grade, and it may be determined that video content of another participant is video content of a low video content grade. Specifically, event information sent by a sending endpoint may indicate a location of a specific participant; in this case, video content of the specific participant may be determined among video content of multiple participants according to the location of the participant, then the video content of the specific participant is graded, and video content corresponding to participants except the specific participant may also be graded. Alternatively, event information sent by a sending endpoint may indicate a sequence number of a specific participant; in this case, a behavioral feature of the participant may be determined according to the sequence number of the specific participant, video content of the specific participant is determined among video content of multiple participants according to the behavioral feature of the participant, and then the video content of the specific participant is graded.

It should be understood that, in the embodiment of the present invention, the video stream sent by each sending endpoint to the apparatus for presentation in a video conference may also be a video stream that does not need to be split. In this case, the apparatus for presentation in a video conference may directly determine a video content grade according to the video stream that does not need to be split and the event information. That the video stream does not need to be split may be that the video stream is already split by each sending endpoint, or the video stream itself does not need to be split. For example, when shooting is being performed, different characters are shot by using different cameras, and video content corresponding to the different characters are independent of each other in one video stream and therefore does not need to be split.

In the embodiment of the present invention, the event information of the all or some sending endpoints of the foregoing at least one sending endpoint may be used to indicate that the all or some sending endpoints need to share a data document, where the video streams of the all or some sending endpoints include the data document. In this case, the data document may be separated from the video streams of the all or some sending endpoints according to the event information, and the data document that is separated from the video streams of the all or some sending endpoints is graded, to determine video content grades of the data documents. The data document may be a PPT, Word, or image file, or the like.

In the embodiment of the present invention, after the video content in the video streams of the all or some sending endpoints is graded according to the event information of the all or some sending endpoints and according to the video streams of the all or some sending endpoints, the method 100 may further include:
if event information of any one sending endpoint of the all or some sending endpoints is changed, dynamically adjusting video content grades corresponding to the all or some sending endpoints.

Specifically, when event information of a sending endpoint is changed, the apparatus for presentation in a video conference may re-grade the video content of the video stream of each sending endpoint, and determine to-be-presented content corresponding to each display area of the multiple display areas of the receiving endpoint according to video content corresponding to a re-determined video content grade, where a change of the event information may be used to indicate a change of a primary site of the video conference, may be used to indicate a change of a speaker, may be used to indicate a change of a collaborator, or the like.

In the embodiment of the present invention, the determining to-be-presented video content corresponding to each display area of the multiple display areas in S140 may include:
generating, according to the video content corresponding to each video content grade of the multiple video content grades and the video layout, to-be-presented video content corresponding to all or some of the display areas, where all or some content of the to-be-presented video content corresponding to the all or some of the display areas is set in a manner of size changing and/or color marking.

Specifically, if video content corresponding to one video content grade exists in the multiple video streams sent by the at least one sending endpoint, video needs to be re-generated according to all video content corresponding to the one video content grade, so as to obtain to-be-presented video content of a display area corresponding to the video content grade. Further, optionally, if video information in the generated to-be-presented video content needs to be highlighted to a user at the receiving endpoint, the video information in the to-be-presented video content may be set in a visual expression manner of size changing and/or color marking. Certainly, the setting may also be implemented in another manner, for example, displayed by means of animation.

Therefore, in the embodiment of the present invention, after a video stream of each sending endpoint of at least one sending endpoint is received, video content in the video stream of each sending endpoint is graded to obtain multiple video content grades corresponding to the at least one sending endpoint; a video layout is determined, where the video layout indicates a display area, of multiple display areas of a receiving endpoint, corresponding to each video content grade of the multiple video content grades; and to-be-presented video content corresponding to each display area of the multiple display areas is determined according to video content corresponding to each video content grade of the multiple video content grades and the video layout, so that the corresponding to-be-presented video content may be presented by using each display area of the multiple display areas, where to-be-presented video content corresponding to different display areas includes video content corresponding to different video content grades. This enables information to be more appropriately displayed in a display area, and avoids manual selection and adjustment by a user, thereby improving video conference experience. The user focuses all attention on a conference itself as the user does not need to perform any operation, which makes the conference more efficient.

Further, when the video content is graded, a video content grade corresponding to focus information may be set to be higher than a video content grade corresponding to non-focus information. Because the to-be-presented video content corresponding to the different display areas includes the video content corresponding to the different video content grades, the focus information and the non-focus information can be distributed to different display areas of a display device, so that focus information in a video conference can be presented clearly and automatically, and non-focus information can be presented in an appropriate and auxiliary manner, which can further improve appropriateness of information display in the display areas.

In the embodiment of the present invention, video content in a video stream of a sending endpoint may be graded into two grades, that is, a grade corresponding to important information and a grade corresponding to auxiliary information. Specifically, which information is graded as important information and which information is graded as auxiliary information are illustrated in the following with reference to Table 1.

**Table 1**

| **Information for viewing in a conference** | **Video content grade** |
|---|---|
| (1) Lecturer of a current issue; | Important information |
| (2) Material for the current issue; | Important information |
| (3) Speaker, person who collaborates in discussion, and questioner who participate in discussion of the current issue; | Important information |
| (4) Other participants (other persons who do not speak, give a speech, or participate in discussion); | Auxiliary information |
| (5) Other material content; | Auxiliary information |

It should be understood that the foregoing table is only an example provided for illustration, and shall not constitute any limitation on the present invention, and the embodiment of the present invention may further include other grading manners. For example, the video content grades in the foregoing table include two grades: important information and auxiliary information. Alternatively, three or even more grades may be set. For example, person importance information (with importance higher than auxiliary information) may be graded according to importance of the speaker, person who collaborates in discussion, and questioner.

Video grading for each site and setting of a visual expression manner for a video stream generated by video content corresponding to each grade in the case of multiple video sites are described in the following with reference to Table 2, where video grades of each site may include two grades (a grade corresponding to important information and a grade corresponding to auxiliary information), and in Table 2, a primary site refers to a site at which a keynote speaker is located, and secondary sites refer to all sites at which persons who are not the keynote speaker are located.

**Table 2**

| | | | | |
|---|---|---|---|---|
| Event information | Primary site (important information) | Primary site (auxiliary information) | Secondary site (important information) | Secondary site (auxiliary information) |
| Share material | Demonstration material + video content of the keynote speaker (in small size) | Persons who are not the keynote speaker | Demonstration material + video content of the keynote speaker (in large size) | Persons who are not the keynote speaker |
| Cancel sharing of material | Video content of the keynote speaker (in small size) | Persons who are not the keynote speaker | Video content of the keynote speaker (in large size) | Persons who are not the keynote speaker |
| Start collaboration | Demonstration material + video content of the keynote speaker (in small size) + video content of one or more persons who participate in collaboration (in small size) (displayed according to a first-in-first-out principle if a quantity of persons participating in collaboration exceeds a specific quantity) | Persons who are not the keynote speaker and who do not participate in collaboration | Demonstration material + video content of the keynote speaker (in small size) + video content of one or more persons who participate in collaboration (in small size) (displayed according to a first-in-first-out principle if a quantity of persons participating in collaboration exceeds a specific quantity) | Persons who are not the keynote speaker and who do not participate in collaboration |
| Cancel collaboration | Demonstration material + video content of the keynote speaker (in small size) | Persons who are not the keynote speaker | Demonstration material + video content of the keynote speaker (in large size) | Persons who are not the keynote speaker |
| Someone speaks | Content unchanged | One or more speakers highlighted by using visual expression (visual expression manners such as color marking and enlargement of a character size) | Content unchanged | One or more speakers highlighted by using visual expression (visual expression manners such as color marking and enlargement of a character size) |
| Stop speaking | Content unchanged | Persons who are not the keynote speaker (no visual highlighting for a character) | Content unchanged | Persons who are not the keynote speaker (no visual highlighting for a character) |

It should be understood that the foregoing table 2 is only an example provided for illustration, and shall not constitute any limitation on the present invention, and the embodiment of the present invention may further include other grading manners and other visual expression manners for video information, which may be determined according to a specific situation.

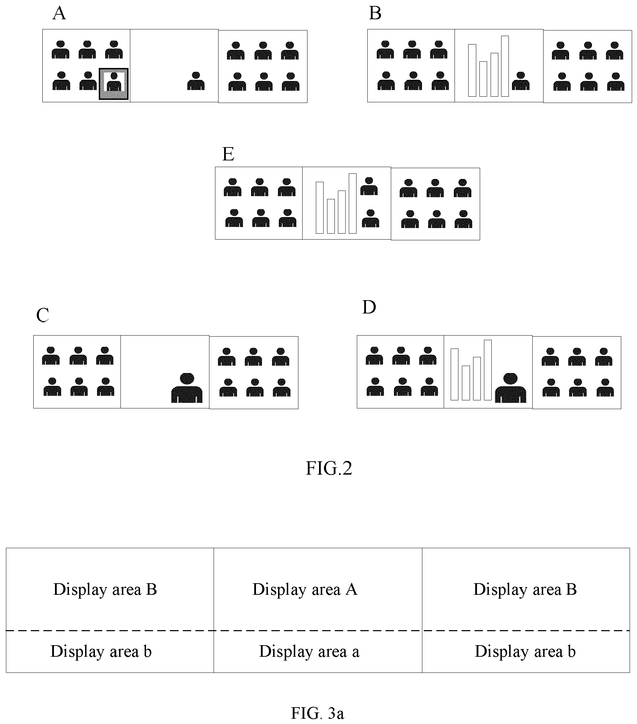

How to grade the video stream of the endpoint corresponding to each video site according to the event information and how to set the visual expression manner for to-be-presented video content corresponding to each grade are described above with reference to Table 2. The following describes, with reference to FIG. 2, grade setting and content included in to-be-presented video content corresponding to grades of the grades if the receiving endpoint is a three-screen terminal.

In FIG. 2, A displays video content of an endpoint corresponding to a primary site if no material is shared, where a central area is an area corresponding to a keynote speaker (important information) at the endpoint corresponding to the primary site, and areas on both sides are areas corresponding to persons who are not the keynote speaker (auxiliary information) at the endpoint corresponding to the primary site. It can be seen that one participant is marked in the areas corresponding to the persons who are not the keynote speaker, which indicates that the participant is a speaker. If there are multiple speakers, the multiple speakers may be highlighted. B displays video content of the endpoint corresponding to the primary site if material is shared, where a central area is an area corresponding to the keynote speaker and shared material (important information) at the endpoint corresponding to the primary site, and areas on both sides are areas corresponding to persons who are not the keynote speakers (auxiliary information) at the endpoint corresponding to the primary site. C displays video content of an endpoint corresponding to a secondary site if no material is shared, where a central area is an area corresponding to the keynote speaker (important information) at the endpoint corresponding to the secondary site, and areas on both sides are areas corresponding to persons who are not the keynote speaker (auxiliary information) at the endpoint corresponding to the secondary site. It can be seen that a size of the keynote speaker in the central area is greater than that of the keynote speaker in the central area of the primary site, that is, the keynote speaker in the central area is highlighted in a manner of size enlargement. D displays video content of the endpoint corresponding to the secondary site if material is shared, where a central area is an area corresponding to the keynote speaker (important information) at the endpoint corresponding to the secondary site, and areas on both sides are areas corresponding to persons who are not the keynote speaker (auxiliary information) at the endpoint corresponding to the secondary site. It can be seen that a size of the keynote speaker in the central area is greater than that of the keynote speaker in the central area of the primary site, that is, the keynote speaker in the central area is highlighted in a manner of size enlargement. E displays video content of an endpoint corresponding to a site at which the keynote speaker is located (or the secondary site) if material is shared and there is a collaborator, where a central area is an area corresponding to the keynote speaker, the collaborator and shared material (important information) (if there are multiple persons who participate in collaboration successively, the persons are added in succession; for a common collaboration and discussion conference, there will not be too many persons who participate in collaboration within a specific period of time, and basically all the persons who participate in collaboration can be displayed; if an extreme case does occur in which many persons participate in collaboration, the persons who participate in collaboration and discussion may be displayed according to a first-in-first-out principle), and areas on both sides are areas corresponding to persons who are not the keynote speaker (auxiliary information) at the endpoint corresponding to the primary site (or the secondary site).

It should be understood that a display image on a display device may include one or more images of the foregoing A, B, C, D, and E. For example, images of A and B may be included, and display areas occupied by the image of A and the image of B do not overlap. That is, important information and auxiliary information of A occupy two display areas, and important information and auxiliary information of B occupy another two display areas.

FIG. 3a-FIG. 3c show diagrams of division of display areas on a display device in a form of a current mainstream terminal;
FIG. 3a is division of display areas on a three-screen display device. The three-screen display device may be divided into four display areas, that is, display areas A, a, B, and b, and different display areas may display to-be-presented video content corresponding to different video content grades. For example, the display area A may display important information of an endpoint corresponding to a primary site, the display area a may display important information of an endpoint corresponding to a secondary site, the display area B may display auxiliary information of the endpoint corresponding to the primary site, and the display area b may display auxiliary information of the endpoint corresponding to the secondary site.

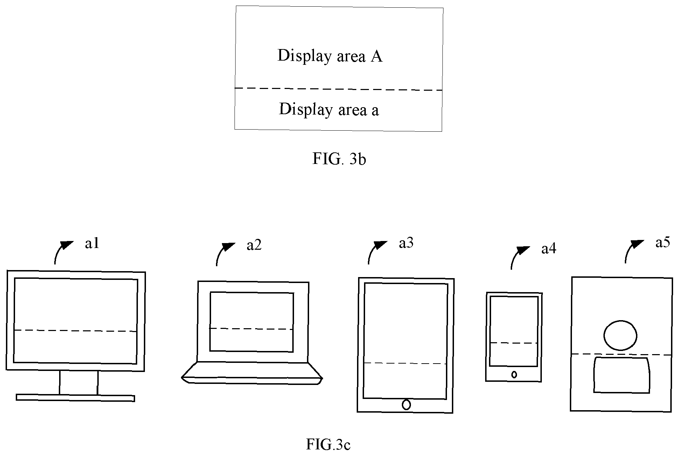

FIG. 3b is division of display areas on a single-screen display device. The single-screen display device may be divided into two display areas, that is, display areas A and a. The display device may be used if a video conference is carried out at two sites. That is, only an image of a peer side of the video conference needs to be displayed. The display area A may display important information of an endpoint corresponding to a peer site, and the display area a may display auxiliary information of the endpoint corresponding to the peer site.

FIG. 3c is a diagram illustrating effects of dividing display areas on display devices of various terminals, where a1 shows display area division of a desktop computer, a2 shows display area division of a laptop computer, a3 shows display area division of a tablet computer, a4 shows display area division of a mobile phone, and a5 shows display area division of a conference terminal (meeting concierge).

It should be understood that, in the embodiment of the present invention, the sending endpoint may further send an audio stream to the control device, and the control device sends the audio stream to the receiving endpoint. Reference may be made to the prior art for specific implementation, and details are not described herein.

Therefore, in the embodiment of the present invention, after a video stream of each sending endpoint of at least one sending endpoint is received, video content in the video stream of each sending endpoint is graded to obtain multiple video content grades corresponding to the at least one sending endpoint; a video layout is determined, where the video layout indicates a display area, of multiple display areas of a receiving endpoint, corresponding to each video content grade of the multiple video content grades; and to-be-presented video content corresponding to each display area of the multiple display areas is determined according to video content corresponding to each video content grade of the multiple video content grades and the video layout, so that the corresponding to-be-presented video content may be presented by using each display area of the multiple display areas, where to-be-presented video content corresponding to different display areas includes video content corresponding to different video content grades. This enables information to be more appropriately displayed in a display area, and avoids manual selection and adjustment by a user, thereby improving video conference experience. The user focuses all attention on a conference itself as the user does not need to perform any operation, which makes the conference more efficient.

Further, when the video content is graded, a video content grade corresponding to focus information may be set to be higher than a video content grade corresponding to non-focus information. Because the to-be-presented video content corresponding to the different display areas includes the video content corresponding to the different video content grades, the focus information and the non-focus information can be distributed to different display areas of a display device, so that focus information in a video conference can be presented clearly and automatically, and non-focus information can be presented in an appropriate and auxiliary manner, which can further improve appropriateness of information display in the display areas.

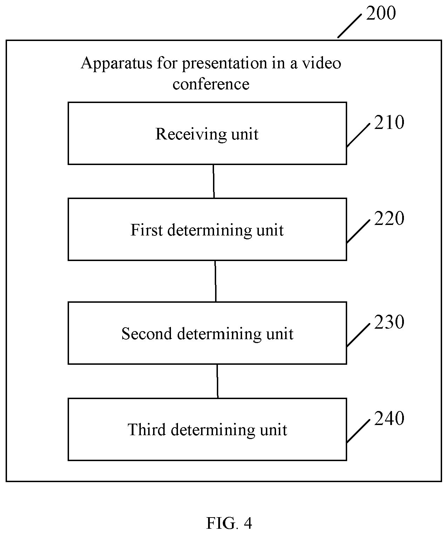

FIG. 4 is a schematic block diagram of an apparatus 300 for presentation in a video conference according to an embodiment of the present invention. As shown in FIG. 4, the apparatus 200 includes:
a receiving unit 210, configured to receive a video stream of each sending endpoint of at least one sending endpoint;
a first determining unit 220, configured to grade video content in the video stream of each sending endpoint according to the video stream of each sending endpoint, to determine a video content grade corresponding to each sending endpoint, where the at least one sending endpoint corresponds to multiple video content grades;
a second determining unit 230, configured to determine a video layout, where the video layout is used to indicate a display area corresponding to each video content grade of the multiple video content grades, where the display area is a display area that is included in multiple display areas of a receiving endpoint, and the video content grades correspond to the display areas one by one; and
a third determining unit 240, configured to determine, according to video content corresponding to each video content grade of the multiple video content grades and the video layout, to-be-presented video content corresponding to each display area of the multiple display areas, so as to present the corresponding to-be-presented video content by using each display area of the multiple display areas, where to-be-presented video content corresponding to different display areas includes video content corresponding to different video content grades.

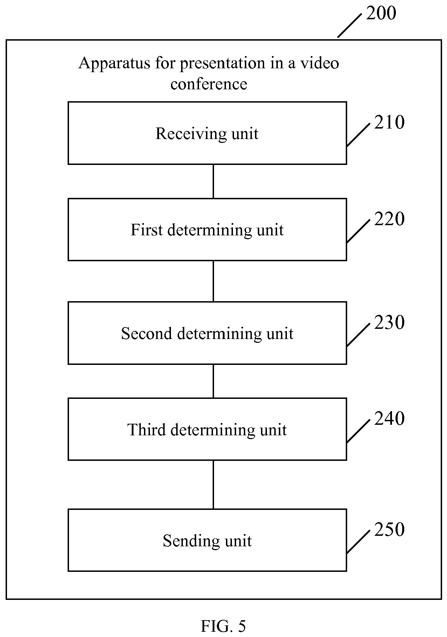

Optionally, in the embodiment of the present invention, the apparatus 300 is a control device. As shown in FIG. 5, the apparatus 200 further includes:
a sending unit 250, configured to send the to-be-presented video content corresponding to each display area of the multiple display areas and indication information to the receiving endpoint, where the indication information is used to indicate a correspondence between the display area and the to-be-presented video content, so that the receiving endpoint presents the corresponding to-be-presented video content by using each display area of the multiple display areas.

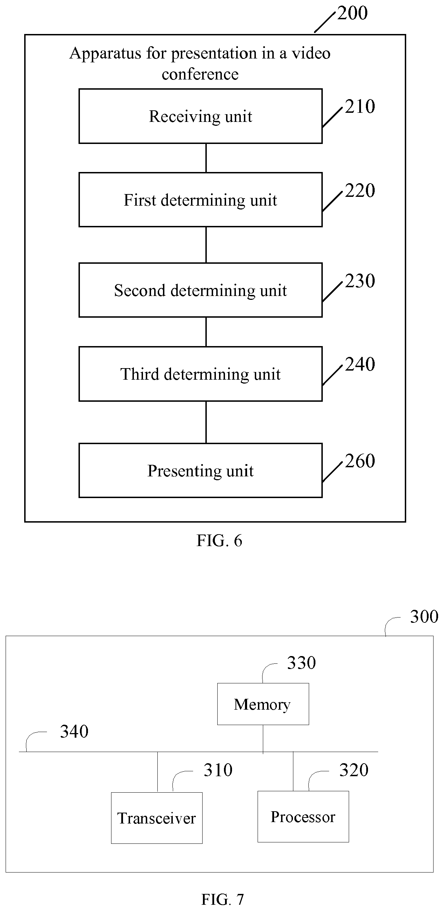

Optionally, in the embodiment of the present invention, the apparatus 200 is the receiving endpoint. As shown in FIG. 6, the apparatus 200 further includes:
a presenting unit 260, configured to present the corresponding to-be-presented video content by using each display area of the multiple display areas.

Optionally, in the embodiment of the present invention, the receiving unit 210 is further configured to: receive event information of all or some sending endpoints of the at least one sending endpoint. The first determining unit 220 is specifically configured to: grade video content in video streams of the all or some sending endpoints according to the event information of the all or some sending endpoints and according to the video streams of the all or some sending endpoints.

Optionally, the event information of the all or some sending endpoints of the at least one sending endpoint is used to indicate a participant event at the all or some sending endpoints. The first determining unit 320 is specifically configured to: perform video splitting on the video streams of the all or some sending endpoints in units of persons, to obtain video content of each participant at the all or some sending endpoints; and grade the video content of each participant at the all or some sending endpoints according to the participant event at the all or some sending endpoints, to determine a video content grade of the video content of each participant.

Optionally, the event information of the all or some sending endpoints of the at least one sending endpoint is used to indicate a keynote speaker event, a collaborator event, a speaker event, or a material sharer event at the all or some sending endpoints.

Optionally, the event information of the all or some sending endpoints of the at least one sending endpoint is used to indicate that the all or some sending endpoints need to share a data document, where the video streams of the all or some sending endpoints include the data document; and the first determining unit 220 is specifically configured to: separate the data document from the video streams of the all or some sending endpoints according to the event information, and grade the data document that is separated from the video streams of the all or some sending endpoints, to determine video content grades of the data documents.

Optionally, after the video content in the video streams of the all or some sending endpoints is graded according to the event information of the all or some sending endpoints and according to the video streams of the all or some sending endpoints, the first determining unit 220 is further configured to: if event information of any one sending endpoint of the all or some sending endpoints is changed, dynamically adjust video content grades corresponding to the all or some sending endpoints.

Optionally, the first determining unit 220 is specifically configured to: perform event determining on video content in video streams of all or some sending endpoints of the at least one sending endpoint, and grade the video content in the video streams of the all or some sending endpoints after the event determining.

Optionally, the first determining unit 220 is specifically configured to: perform video splitting on the video streams of the all or some sending endpoints in units of persons, to obtain video content of each participant of the all or some sending endpoints; and perform event determining on the video content of each participant, and grade the video content of each participant after the event determining, to determine a video content grade of the video content of each participant.

Optionally, the first determining unit 220 is specifically configured to: determine that the video content of the participant is video content of a keynote speaker, video content of a collaborator, video content of a speaker, or video content of a material sharer.

Optionally, the first determining unit 220 is specifically configured to: perform video splitting on the video streams of the all or some sending endpoints, and determine that a data document exists in each of the video streams of the all or some sending endpoints; and grade the data document in the split video streams of the all or some sending endpoints, to determine video content grades of the data documents.

Optionally, the first determining unit 220 is specifically configured to: grade the video content in the video stream of each sending endpoint, where the video content grade corresponding to each sending endpoint does not overlap a video content grade of another sending endpoint.

Optionally, the third determining unit 240 is specifically configured to: generate, according to the video content corresponding to each video content grade of the multiple video content grades and the video layout, to-be-presented video content corresponding to all or some of the display areas, where all or some content of the to-be-presented video content corresponding to the all or some of the display areas is set in a manner of size changing and/or color marking.

It should be understood that, in the embodiment of the present invention, the first determining unit 220 may further implement a function of decoding a video stream. That is, before the video content in the video stream received by the receiving unit 210 is graded, the first determining unit 220 may decode the video stream received by the receiving unit. The third determining unit 240 may encode the video content corresponding to each video content grade and send encoded video content to the receiving endpoint, that is, may implement an encoding function.

It should be further understood that, in the embodiment of the present invention, the apparatus 200 for presentation in a video conference may further include an audio encoding and decoding unit, configured to perform encoding and decoding on audio of an endpoint that is received.

It should be further understood that, the apparatus 200 for presentation in a video conference may correspond to the apparatus 200 for presentation in a video conference in the method 100, and is configured to implement a corresponding function in the method 100, and details are not described herein again for brevity.

Therefore, in the embodiment of the present invention, after a video stream of each sending endpoint of at least one sending endpoint is received, video content in the video stream of each sending endpoint is graded to obtain multiple video content grades corresponding to the at least one sending endpoint; a video layout is determined, where the video layout indicates a display area, of multiple display areas of a receiving endpoint, corresponding to each video content grade of the multiple video content grades; and to-be-presented video content corresponding to each display area of the multiple display areas is determined according to video content corresponding to each video content grade of the multiple video content grades and the video layout, so that the corresponding to-be-presented video content may be presented by using each display area of the multiple display areas, where to-be-presented video content corresponding to different display areas includes video content corresponding to different video content grades. This enables information to be more appropriately displayed in a display area, and avoids manual selection and adjustment by a user, thereby improving video conference experience. The user focuses all attention on a conference itself as the user does not need to perform any operation, which makes the conference more efficient.

Further, when the video content is graded, a video content grade corresponding to focus information may be set to be higher than a video content grade corresponding to non-focus information. Because the to-be-presented video content corresponding to the different display areas includes the video content corresponding to the different video content grades, the focus information and the non-focus information can be distributed to different display areas of a display device, so that focus information in a video conference can be presented clearly and automatically, and non-focus information can be presented in an appropriate and auxiliary manner, which can further improve appropriateness of information display in the display areas.

FIG. 7 is a schematic block diagram of an apparatus 300 for presentation in a video conference according to an embodiment of the present invention. As shown in FIG. 7, the apparatus 300 for presentation in a video conference includes a transceiver 310, a processor 320, a memory 330, and a bus 340. The transceiver 310 is configured to implement a communication connection with an endpoint. The bus 340 is configured to implement communication connections between internal parts of the control device. The memory 330 is configured to store program code. The processor 320 is configured to call the program code stored in the memory 330 to perform the following operations:
receiving, by using the transceiver 310, a video stream of each sending endpoint of at least one sending endpoint;
grading video content in the video stream of each sending endpoint according to the video stream of each sending endpoint, to determine a video content grade corresponding to each sending endpoint, where the at least one sending endpoint corresponds to multiple video content grades;
determining a video layout, where the video layout is used to indicate a display area corresponding to each video content grade of the multiple video content grades, where the display area is a display area that is included in multiple display areas of a receiving endpoint, and the video content grades correspond to the display areas one by one; and
determining, according to video content corresponding to each video content grade of the multiple video content grades and the video layout, to-be-presented video content corresponding to each display area of the multiple display areas, so as to present the corresponding to-be-presented video content by using each display area of the multiple display areas, where to-be-presented video content corresponding to different display areas includes video content corresponding to different video content grades.

Optionally, the apparatus 300 is a control device, and the processor 320 is configured to call the program code stored in the memory 330 to further perform the following operation:
sending, by using the transceiver 310, the to-be-presented video content corresponding to each display area of the multiple display areas and indication information to the receiving endpoint, where the indication information is used to indicate a correspondence between the display area and the to-be-presented video content, so that the receiving endpoint presents the corresponding to-be-presented video content by using each display area of the multiple display areas.

Optionally, the apparatus 300 is the receiving endpoint, and the processor 320 is configured to call the program code stored in the memory 330 to further perform the following operation: presenting the corresponding to-be-presented video content by using each display area of the multiple display areas.

The processor 320 is configured to call the program code stored in the memory 330 to specifically perform the following operations:
receiving, by using the transceiver 310, event information of all or some sending endpoints of the at least one sending endpoint; and
grading video content in video streams of the all or some sending endpoints according to the event information of the all or some sending endpoints and according to the video streams of the all or some sending endpoints.

Optionally, the event information of the all or some sending endpoints of the at least one sending endpoint is used to indicate a participant event at the all or some sending endpoints; and the processor 320 is configured to call the program code stored in the memory 330 to specifically perform the following operations:
performing video splitting on the video streams of the all or some sending endpoints in units of persons, to obtain video content of each participant at the all or some sending endpoints; and
grading the video content of each participant at the all or some sending endpoints according to the participant event at the all or some sending endpoints, to determine a video content grade of the video content of each participant.

Optionally, the event information of the all or some sending endpoints of the at least one sending endpoint is used to indicate a keynote speaker event, a collaborator event, a speaker event, or a material sharer event at the all or some sending endpoints.

Optionally, the event information of the all or some sending endpoints of the at least one sending endpoint is used to indicate that the all or some sending endpoints need to share a data document, where the video streams of the all or some sending endpoints include the data document. The processor 320 is configured to call the program code stored in the memory 330 to specifically perform the following operations: separating the data document from the video streams of the all or some sending endpoints according to the event information, and grading the data document that is separated from the video streams of the all or some sending endpoints, to determine video content grades of the data documents.

Optionally, the processor 320 is configured to call the program code stored in the memory 330 to specifically perform the following operation: after the grading video content in video streams of the all or some sending endpoints according to the event information of the all or some sending endpoints and according to the video streams of the all or some sending endpoints, if event information of any one sending endpoint of the all or some sending endpoints is changed, dynamically adjusting video content grades corresponding to the all or some sending endpoints.

Optionally, the processor 320 is configured to call the program code stored in the memory 330 to specifically perform the following operations: performing event determining on video content in video streams of all or some sending endpoints of the at least one sending endpoint, and grading the video content in the video streams of the all or some sending endpoints after the event determining.

The processor 320 is configured to call the program code stored in the memory 330 to specifically perform the following operations: performing video splitting on the video streams of the all or some sending endpoints in units of persons, to obtain video content of each participant of the all or some sending endpoints; and
performing event determining on the video content of each participant, and grading the video content of each participant after the event determining, to determine a video content grade of the video content of each participant.

The processor 320 is configured to call the program code stored in the memory 330 to specifically perform the following operation: determining that the video content of the participant is video content of a keynote speaker, video content of a collaborator, video content of a speaker, or video content of a material sharer.

The processor 320 is configured to call the program code stored in the memory 330 to specifically perform the following operations: performing video splitting on the video streams of the all or some sending endpoints, and determining that a data document exists in each of the video streams of the all or some sending endpoints; and
grading the data document in the split video streams of the all or some sending endpoints, to determine video content grades of the data documents.

The processor 320 is configured to call the program code stored in the memory 330 to specifically perform the following operation: grading the video content in the video stream of each sending endpoint, where the video content grade corresponding to each sending endpoint does not overlap a video content grade of another sending endpoint.

The processor 320 is configured to call the program code stored in the memory 330 to specifically perform the following operation: generating, according to the video content corresponding to each video content grade of the multiple video content grades and the video layout, to-be-presented video content corresponding to all or some of the display areas, where all or some content of the to-be-presented video content corresponding to the all or some of the display areas is set in a manner of size changing and/or color marking.

It should be understood that, in the embodiment of the present invention, the processor of the apparatus 300 for presentation in a video conference may implement functions of encoding and decoding a video stream, or the apparatus 300 for presentation in a video conference may further include an encoder and a decoder for implementing encoding and decoding of a video stream respectively.

It should be further understood that the apparatus 300 for presentation in a video conference may correspond to the apparatus for presentation in a video conference in the method 100, and is configured to implement a corresponding function in the method 100, and details are not described herein again for brevity.

Therefore, in the embodiment of the present invention, after a video stream of each sending endpoint of at least one sending endpoint is received, video content in the video stream of each sending endpoint is graded to obtain multiple video content grades corresponding to the at least one sending endpoint; a video layout is determined, where the video layout indicates a display area, of multiple display areas of a receiving endpoint, corresponding to each video content grade of the multiple video content grades; and to-be-presented video content corresponding to each display area of the multiple display areas is determined according to video content corresponding to each video content grade of the multiple video content grades and the video layout, so that the corresponding to-be-presented video content may be presented by using each display area of the multiple display areas, where to-be-presented video content corresponding to different display areas includes video content corresponding to different video content grades. This enables information to be more appropriately displayed in a display area, and avoids manual selection and adjustment by a user, thereby improving video conference experience. The user focuses all attention on a conference itself as the user does not need to perform any operation, which makes the conference more efficient.

Further, when the video content is graded, a video content grade corresponding to focus information may be set to be higher than a video content grade corresponding to non-focus information. Because the to-be-presented video content corresponding to the different display areas includes the video content corresponding to the different video content grades, the focus information and the non-focus information can be distributed to different display areas of a display device, so that focus information in a video conference can be presented clearly and automatically, and non-focus information can be presented in an appropriate and auxiliary manner, which can further improve appropriateness of information display in the display areas.

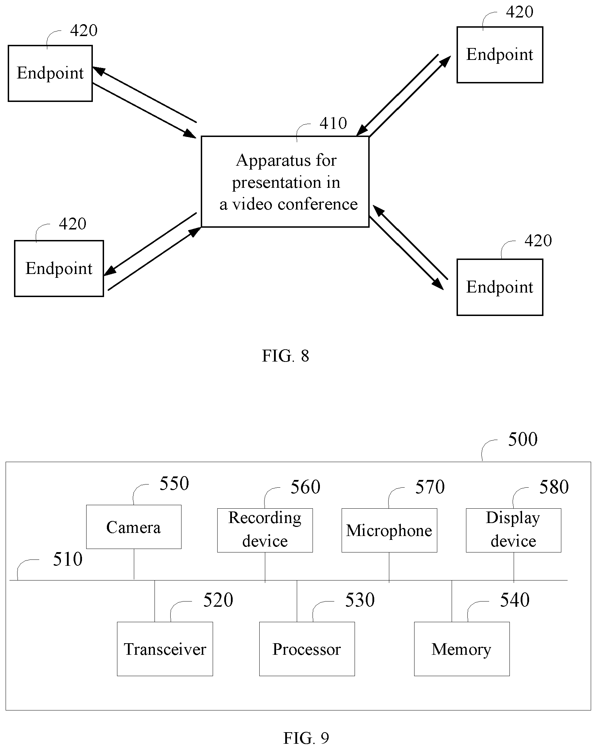

FIG. 8 is a system for presentation in a video conference according to an embodiment of the present invention. As shown in FIG. 8, the system may include an apparatus 410 for presentation in a video conference and at least one sending endpoint 420. The apparatus 410 for presentation in a video conference may correspond to the foregoing the apparatus 200 or 300 for presentation in a video conference, and details are not described herein again for brevity.

It should be understood that, any one sending endpoint of the at least one sending endpoint may be both a sending endpoint and a receiving endpoint, that is, it may send a video stream to the apparatus 410 for presentation in a video conference, and may also receive to-be-presented video content that is sent by the apparatus 410 for presentation in a video conference and is determined according to a video stream sent by another sending endpoint. Reference may be made to the foregoing descriptions for operations of specific implementation.

It should be understood that there may be one or more sending endpoints in the present invention although FIG. 8 shows multiple sending endpoints. The apparatus 410 for presentation in a video conference itself in FIG. 8 may be a sending endpoint or a receiving endpoint.

FIG. 9 is a schematic block diagram of an endpoint 500 according to an embodiment of the present invention. As shown in FIG. 9, the endpoint 500 may include a bus 510, a transceiver 520, a processor 530, and a memory 540.

Optionally, as shown in FIG. 9, the endpoint 500 may include a camera 550, a recording device 560, and the like. The camera 550 and the recording device 560 may perform video shooting and audio recording respectively. The processor 530 calls program code stored in the memory to encode video shot by the camera and encode audio recorded by the recording device, so as to obtain encoded audio and video, and sends the audio and video obtained by a codec to an apparatus 410 for presentation in a video conference (which may be a control device or a receiving endpoint) by using the transceiver 520. In this case, the endpoint 500 may be used as the sending endpoint mentioned above.

Optionally, as shown in FIG. 9, the endpoint 500 may include a microphone 570, a display device 580, and the like. The processor 530 may receive, by using the transceiver 520, an audio and video stream sent by the apparatus 410 for presentation in a video conference, perform decoding, then present a video stream in a corresponding display area by using the display device 580, and output audio by using the microphone 570. It should be understood that the endpoint 500 may further include an encoder and a decoder. That is, the processor does not implement encoding and decoding functions, but the encoder and the decoder implement encoding and decoding. In this case, the endpoint 500 may be used as the receiving endpoint mentioned above. Optionally, the endpoint 500 may receive a video stream sent by a sending endpoint, perform decoding, determine to-be-presented video content corresponding to each display area (refer to the method 100 for details), then present the to-be-presented video content in a corresponding display area by using the display device 580, and output audio by using the microphone 570.

Therefore, in the embodiment of the present invention, after a video stream of each sending endpoint of at least one sending endpoint is received, video content in the video stream of each sending endpoint is graded to obtain multiple video content grades corresponding to the at least one sending endpoint; a video layout is determined, where the video layout indicates a display area, of multiple display areas of a receiving endpoint, corresponding to each video content grade of the multiple video content grades; and to-be-presented video content corresponding to each display area of the multiple display areas is determined according to video content corresponding to each video content grade of the multiple video content grades and the video layout, so that the corresponding to-be-presented video content may be presented by using each display area of the multiple display areas, where to-be-presented video content corresponding to different display areas includes video content corresponding to different video content grades. This enables information to be more appropriately displayed in a display area, and avoids manual selection and adjustment by a user, thereby improving video conference experience. The user focuses all attention on a conference itself as the user does not need to perform any operation, which makes the conference more efficient.

Further, when the video content is graded, a video content grade corresponding to focus information may be set to be higher than a video content grade corresponding to non-focus information. Because the to-be-presented video content corresponding to the different display areas includes the video content corresponding to the different video content grades, the focus information and the non-focus information can be distributed to different display areas of a display device, so that focus information in a video conference can be presented clearly and automatically, and non-focus information can be presented in an appropriate and auxiliary manner, which can further improve appropriateness of information display in the display areas.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for presentation in a video conference, comprising:
receiving a video stream of each sending endpoint of at least one sending endpoint;
grading video content in the video stream of each sending endpoint according to the video stream of each sending endpoint, to determine a video content grade corresponding to each sending endpoint, wherein the at least one sending endpoint corresponds to multiple video content grades;
determining a video layout, wherein the video layout is used to indicate a display area corresponding to each video content grade of the multiple video content grades, wherein the display area is one of multiple display areas of a receiving endpoint, and the video content grades correspond to the display areas one by one; and
determining, according to video content corresponding to each video content grade of the multiple video content grades and the video layout, to-be-presented video content corresponding to each display area of the multiple display areas, so as to present the corresponding to-be-presented video content by using each display area of the multiple display areas, wherein to-be-presented video content corresponding to different display areas comprises video content corresponding to different video content grades.

2. The method according to claim 1, wherein the method is executed by a control device, and the method further comprises:
sending the to-be-presented video content corresponding to each display area of the multiple display areas and indication information to the receiving endpoint, wherein the indication information is used to indicate a correspondence between the display area and the to-be-presented video content, so that the receiving endpoint presents the corresponding to-be-presented video content by using each display area of the multiple display areas.

3. The method according to claim 1, wherein the method is executed by the receiving endpoint, and the method further comprises:
presenting, by the receiving endpoint, the corresponding to-be-presented video content by using each display area of the multiple display areas.

4. The method according to any one of claims 1 to 3, wherein the method further comprises: receiving event information of all or some sending endpoints of the at least one sending endpoint; and
the grading video content in the video stream of each sending endpoint according to the video stream of each sending endpoint comprises:
grading video content in video streams of the all or some sending endpoints according to the event information of the all or some sending endpoints and according to the video streams of the all or some sending endpoints.

5. The method according to claim 4, wherein the event information of the all or some sending endpoints of the at least one sending endpoint is used to indicate a participant event at the all or some sending endpoints; and
the grading video content in video streams of the all or some sending endpoints according to the event information of the all or some sending endpoints and according to the video streams of the all or some sending endpoints comprises:
performing video splitting on the video streams of the all or some sending endpoints in units of persons, to obtain video content of each participant at the all or some sending endpoints; and
grading the video content of each participant at the all or some sending endpoints according to the participant event at the all or some sending endpoints, to determine a video content grade of the video content of each participant.

6. The method according to claim 5, wherein the event information of the all or some sending endpoints of the at least one sending endpoint is used to indicate a keynote speaker event, a collaborator event, a speaker event, or a material sharer event at the all or some sending endpoints.

7. The method according to any one of claims 4 to 6, wherein the event information of the all or some sending endpoints of the at least one sending endpoint is used to indicate that the all or some sending endpoints need to share a data document, wherein the video streams of the all or some sending endpoints comprise a data document; and
the grading video content in video streams of the all or some sending endpoints according to the event information of the all or some sending endpoints and according to the video streams of the all or some sending endpoints comprises:
separating the data document from the video streams of the all or some sending endpoints according to the event information, and grading the data document that is separated from the video streams of the all or some sending endpoints, to determine video content grades of the data documents.

8. The method according to any one of claims 4 to 7, wherein after the grading video content in video streams of the all or some sending endpoints according to the event information of the all or some sending endpoints and according to the video streams of the all or some sending endpoints, the method further comprises:
if event information of any one sending endpoint of the all or some sending endpoints is changed, dynamically adjusting video content grades corresponding to the all or some sending endpoints.

9. The method according to any one of claims 1 to 3, wherein the grading video content in the video stream of each sending endpoint according to the video stream of each sending endpoint comprises:
performing event determining on video content in video streams of all or some sending endpoints of the at least one sending endpoint, and grading the video content in the video streams of the all or some sending endpoints after the event determining.

10. The method according to claim 9, wherein the performing event determining on video content in video streams of all or some sending endpoints of the at least one sending endpoint, and grading the video content in the video streams of the all or some sending endpoints after the event determining comprises:
performing video splitting on the video streams of the all or some sending endpoints in units of persons, to obtain video content of each participant of the all or some sending endpoints; and
performing event determining on the video content of each participant, and grading the video content of each participant after the event determining, to determine a video content grade of the video content of each participant.

11. The method according to claim 10, wherein the performing event determining on the video content of each participant comprises:
determining that the video content of the participant is video content of a keynote speaker, video content of a collaborator, video content of a speaker, or video content of a material sharer.

12. The method according to any one of claims 9 to 11, wherein the performing event determining on video content in video streams of all or some sending endpoints of the at least one sending endpoint, and grading the video content in the video streams of the all or some sending endpoints after the event determining comprises:
performing video splitting on the video streams of the all or some sending endpoints, and determining that a data document exists in the video streams of the all or some sending endpoints; and
grading the data document in the split video streams of the all or some sending endpoints, to determine video content grades of the data documents.

13. The method according to any one of claims 1 to 12, wherein the grading video content in the video stream of each sending endpoint comprises:
grading the video content in the video stream of each sending endpoint, wherein the video content grade corresponding to each sending endpoint does not overlap a video content grade of another sending endpoint.

14. The method according to any one of claims 1 to 13, wherein the determining to-be-presented video content corresponding to each display area of the multiple display areas comprises:
generating, according to the video content corresponding to each video content grade of the multiple video content grades and the video layout, to-be-presented video content corresponding to all or some of the display areas, wherein all or some content of the to-be-presented video content corresponding to the all or some of the display areas is set in a manner of size changing and/or color marking.

15. An apparatus for presentation in a video conference, comprising:
a receiving unit, configured to receive a video stream of each sending endpoint of at least one sending endpoint;
a first determining unit, configured to grade video content in the video stream of each sending endpoint according to the video stream of each sending endpoint, to determine a video content grade corresponding to each sending endpoint, wherein the at least one sending endpoint corresponds to multiple video content grades;
a second determining unit, configured to determine a video layout, wherein the video layout is used to indicate a display area corresponding to each video content grade of the multiple video content grades, wherein the display area is one of multiple display areas of a receiving endpoint, and the video content grades correspond to the display areas one by one; and
a third determining unit, configured to determine, according to video content corresponding to each video content grade of the multiple video content grades and the video layout, to-be-presented video content corresponding to each display area of the multiple display areas, so as to present the corresponding to-be-presented video content by using each display area of the multiple display areas, wherein to-be-presented video content corresponding to different display areas comprises video content corresponding to different video content grades.

16. The method according to claim 15, wherein the apparatus is a control device, and the apparatus further comprises:
a sending unit, configured to send the to-be-presented video content corresponding to each display area of the multiple display areas and indication information to the receiving endpoint, wherein the indication information is used to indicate a correspondence between the display area and the to-be-presented video content, so that the receiving endpoint presents the corresponding to-be-presented video content by using each display area of the multiple display areas.

17. The method according to claim 15, wherein the apparatus is the receiving endpoint, and the apparatus further comprises:
a presenting unit, configured to present the corresponding to-be-presented video content by using each display area of the multiple display areas.

18. The method according to any one of claims 15 to 17, wherein
the receiving unit is further configured to: receive event information of all or some sending endpoints of the at least one sending endpoint; and
the first determining unit is specifically configured to: grade video content in video streams of the all or some sending endpoints according to the event information of the all or some sending endpoints and according to the video streams of the all or some sending endpoints.

19. The method according to claim 18, wherein the event information of the all or some sending endpoints of the at least one sending endpoint is used to indicate a participant event at the all or some sending endpoints; and
the first determining unit is specifically configured to:
perform video splitting on the video streams of the all or some sending endpoints in units of persons, to obtain video content of each participant at the all or some sending endpoints; and
grade the video content of each participant at the all or some sending endpoints according to the participant event at the all or some sending endpoints, to determine a video content grade of the video content of each participant.

20. The method according to claim 19, wherein the event information of the all or some sending endpoints of the at least one sending endpoint is used to indicate a keynote speaker event, a collaborator event, a speaker event, or a material sharer event at the all or some sending endpoints.

21. The method according to any one of claims 18 to 20, wherein the event information of the all or some sending endpoints of the at least one sending endpoint is used to indicate that the all or some sending endpoints need to share a data document, wherein the video streams of the all or some sending endpoints comprise the data document; and
the first determining unit is specifically configured to:
separate the data document from the video streams of the all or some sending endpoints according to the event information, and grade the data document that is separated from the video streams of the all or some sending endpoints, to determine video content grades of the data documents.

22. The method according to any one of claims 18 to 21, wherein after the video content in the video streams of the all or some sending endpoints is graded according to the event information of the all or some sending endpoints and according to the video streams of the all or some sending endpoints, the first determining unit is further configured to:
if event information of any one sending endpoint of the all or some sending endpoints is changed, dynamically adjust video content grades corresponding to the all or some sending endpoints.

23. The method according to any one of claims 15 to 17, wherein the first determining unit is specifically configured to:
perform event determining on video content in video streams of all or some sending endpoints of the at least one sending endpoint, and grade the video content in the video streams of the all or some sending endpoints after the event determining.

24. The method according to claim 23, wherein the first determining unit is specifically configured to:
perform video splitting on the video streams of the all or some sending endpoints in units of persons, to obtain video content of each participant of the all or some sending endpoints; and
perform event determining on the video content of each participant, and grade the video content of each participant after the event determining, to determine a video content grade of the video content of each participant.

25. The method according to claim 24, wherein the first determining unit is specifically configured to:
determine that the video content of the participant is video content of a keynote speaker, video content of a collaborator, video content of a speaker, or video content of a material sharer.

26. The method according to any one of claims 23 to 25, wherein the first determining unit is specifically configured to:
perform video splitting on the video streams of the all or some sending endpoints, and determine that a data document exists in each of the video streams of the all or some sending endpoints; and
grade the data document in the split video streams of the all or some sending endpoints, to determine video content grades of the data documents.

27. The method according to any one of claims 15 to 26, wherein the first determining unit is specifically configured to:
grade the video content in the video stream of each sending endpoint, wherein the video content grade corresponding to each sending endpoint does not overlap a video content grade of another sending endpoint.

28. The method according to any one of claims 15 to 27, wherein the third determining unit is specifically configured to:
generate, according to the video content corresponding to each video content grade of the multiple video content grades and the video layout, to-be-presented video content corresponding to all or some of the display areas, wherein all or some content of the to-be-presented video content corresponding to the all or some of the display areas is set in a manner of size changing and/or color marking.

29. A system for presentation in a video conference, comprising the apparatus according to any one of claims 15 to 28 and comprising at least one sending endpoint, wherein each endpoint of the at least one sending endpoint is configured to send a video stream to the apparatus.
